# FASCICULE DE BREVET EUROPEEN

(11) **EP 3 803 159 B1**
(45) Date de publication et mention de la délivrance du brevet: **30.03.2022**
(21) Numéro de dépôt: 19735614.0
(22) Date de dépôt: 05.06.2019
(51) Int. Cl.: F16H 57/08, F16H 1/28

(54) **PROCEDE D'ASSEMBLAGE D'UN REDUCTEUR ET INSTALLATION DE MISE EN OEUVRE DU PROCEDE**
VERFAHREN ZUM ZUSAMMENBAU EINES UNTERSETZUNGSGETRIEBES UND ANLAGE ZUR DURCHFÜHRUNG DES VERFAHRENS
METHOD FOR ASSEMBLING A REDUCTION GEAR AND FACILITY FOR IMPLEMENTING THE METHOD

(30) Priorité: 05.06.2018 FR 1854873
(43) Date de publication de la demande: 14.04.2021
(73) Titulaire: Safran Transmission Systems, 92700 Colombes (FR)
(72) Inventeur: DI GIOVANNI, Jean-Charles, Michel, Pierre, 77550 MOISSY-CRAMAYEL (FR); RAPPAPORT, Florian, 77550 MOISSY-CRAMAYEL (FR)
(74) Mandataire: Ernest Gutmann - Yves Plasseraud S.A.S.
(86) Numéro de dépôt international: PCT/FR2019/051346
(87) Numéro de publication internationale: WO 2019/234357

(56) Documents cités:
- EP-A1- 2 182 244
- DE-A1- 4 304 657
- FR-A1- 3 035 375

## Description

### DOMAINE

La présente divulgation concerne un procédé de montage d'un planétaire externe dans un réducteur ainsi qu'une installation pour la mise en œuvre du procédé.

### CONTEXTE

Classiquement un réducteur de transmission de puissance dans turbomachine comprend des pignons satellites en prise avec un planétaire externe et un pignon central ou planétaire interne. Les pignons satellites sont portés par un porte-satellite et montés libre en rotation sur des axes. Un tel réducteur peut servir notamment à la transmission de puissance d'un arbre moteur, tel que l'arbre d'un compresseur basse pression, à une roue de soufflante par l'intermédiaire d'un pignon central porté par l'arbre.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou composées :
- Sur un réducteur planétaire, le porte-satellites est fixe et le planétaire externe constitue l'arbre de sortie du dispositif qui tourne dans le sens inverse du planétaire interne.
- Sur un réducteur épicycloïdal, le planétaire externe est fixe et le porte-satellites constitue l'arbre de sortie du dispositif qui tourne dans le même sens que le planétaire interne.
- Sur un réducteur différentiel, aucun élément n'est fixé en rotation. Le planétaire externe tourne dans le sens contraire du planétaire interne et du porte-satellites.

Dans un agencement particulier d'un réducteur, le planétaire externe comprend une première couronne aval et une seconde couronne amont montées en prise, respectivement, avec des premières dentures aval des satellites et des secondes dentures amont satellites. L'utilisation d'un planétaire externe formé d'une première et d'une seconde couronne est nécessaire lorsque la denture de la première couronne, la denture de la seconde couronne et les première et secondes dentures des satellites sont inclinées par rapport à l'axe longitudinal du réducteur, c'est-à-dire l'axe de rotation de la turbomachine. Dans cette configuration, le planétaire interne comprend également deux dentures. La même nécessité s'impose, de manière encore plus évidente, lorsque les dentures présentent une configuration en chevrons. Rappelons qu'une denture en chevrons présente l'avantage de réduire le niveau de bruit et d'augmenter le nombre de contact entre les satellites et les planétaires interne et externe. Ainsi, lorsque le planétaire externe comprend une première couronne et une seconde couronne, la première couronne est engagée axialement sur les premières dentures satellite selon un premier sens et la seconde couronne est engagée axialement sur les secondes dentures satellite selon un second sens opposé au premier sens.

Pour permettre un engrènement optimal avec les satellites, les première et seconde couronnes doivent être positionnées et orientées de manière précise l'une par rapport à l'autre, c'est-à-dire avoir leur denture respective concentriques et être orientées angulairement l'une par rapport à l'autre de façon précise. Dans le cas où elles sont mal positionnées et/ou mal orientées, cela conduit à induire une dissymétrie de charge en fonctionnement supérieure sur l'une des couronnes par rapport à l'autre des couronnes pouvant dès lors la fragiliser ainsi que les dentures associées des satellites. Cela peut aussi conduire à une usure prématurée des dentures des couronnes et des satellites, dégrader le rendement, augmenter le bruit produit et augmenter les vibrations.

Pour ce qui concerne spécifiquement les dentures en chevrons, une difficulté particulière se pose. En effet, chaque dent de la première denture du planétaire interne ou externe ou des satellites comprend deux flancs et une droite s'étendant le long de l'un des flancs intercepte une droite s'étendant le long d'un flanc de la seconde denture au niveau d'une position axiale donnée. Pour avoir un bon fonctionnement du réducteur, il faut que les différentes positions axiales précitées soient toutes situées dans un même plan radial. Or, les positions axiales des interceptions dépendent des défauts d'usinages. Pour compenser ces défauts d'usinages, on a recours aux solutions, décrites ci-après, de centrage des première et seconde couronnes.

Dans la technique connue, les couronnes sont fabriquées séparément, assemblées, puis rectifiées une fois assemblées. Elles sont alors appairées et considérées comme un ensemble. On réalise l'alignement des première et seconde couronnes de plusieurs manières. Ainsi, selon une première possibilité, on effectue un centrage annulaire des première et seconde couronnes autour de l'axe du réducteur et on utilise un pion pour réaliser l'orientation angulaire des première et seconde couronnes. Selon une deuxième possibilité, on utilise deux pions frettés dans l'une des couronnes et engagés dans deux trous ajustés de l'autre des couronnes. Dans une troisième possibilité, on utilise trois pions répartis à 120° les uns des autres autour de l'axe du réducteur et frettés dans l'une des couronnes et montés dans trois trous oblongs ajustés de l'autre des couronnes. Enfin, dans une quatrième possibilité, on utilise des vis de fixation des première et seconde couronnes comme des vis centreuses, permettant ainsi un positionnement et une orientation combinés, qui viennent remplacer les pions tout en assurant le maintien en position ainsi que la reprise de couple entre les première et seconde couronnes.

Le document DE4304657A1 décrit un train d'engrenages destiné à l'automobile et comportant une roue solaire sur l'arbre moteur, des pignons planétaires sur un support et une couronne reliée à un autre support.

### RESUME DE L'INVENTION

Le présent document concerne tout d'abord un procédé de montage d'un réducteur comprenant les étapes de la revendication 1.

Chacune de la première couronne et de la seconde couronne est convenablement centrée sur les dentures respectives des satellites. Ainsi, la première couronne est centrée sur les premières dentures des satellites et la seconde couronne est centrée sur les secondes dentures des satellites. Le centrage de la première couronne par rapport à la seconde couronne n'est plus une nécessité pour assurer un bon fonctionnement du réducteur. Le procédé permet d'assurer une meilleure répartition des contacts entre les dentures des satellites et les dentures des couronnes, c'est-à-dire entre, d'une part, les premières dentures des satellites et la denture de la première couronne et, d'autre part, entre les secondes dentures des satellites et la denture de la seconde couronne.

Il est ainsi possible d'appliquer un couple correspondant au couple subit par le réducteur lors d'une phase d'utilisation donnée. De cette manière, on induit un effort de flexion sur les dentures en contact permettant ainsi que le réducteur soit déjà dans une configuration adaptée à la phase d'utilisation souhaitée lorsqu'on atteint cette phase de manière à ce que les deux couronnes soient positionnées et orientées (ou appairées) en fonction de la flexion que les dentures satellites subiraient durant cette phase de vol.

La solution technique proposée permet d'assurer le positionnement et l'orientation des première et seconde couronnes entre elles ce qui a pour effet d'avoir des couronnes plus simple à usiner car ne nécessitant pas de rectification assemblée, ce qui est dès lors plus économique. Sans rectification assemblées, les première et seconde couronnes ne sont pas appairées, les première et seconde couronnes sont ainsi interchangeables avec d'autre première et seconde couronnes, ce qui induit moins de rebuts, facilite le montage et participe à l'augmentation de la durée de vie du réducteur. En outre, cela permet une réparation simplifiée, en permettant en cas d'endommagement des dentures de l'une des couronnes, de ne plus avoir à changer l'ensemble composé des deux couronnes, mais en changeant uniquement la couronne endommagée, puis en procédant à nouveau à l'assemblage via la méthode proposée dans le présent document.

Selon une autre caractéristique, le procédé peut comprendre après l'étape c) une étape de solidarisation de la première couronne et de la seconde couronne. Ainsi, alors que le couple est maintenu sur les couronnes, on les fixe ensemble afin de figer le positionnement et l'orientation des couronnes par rapport aux satellites.

L'étape de solidarisation peut être réalisée par boulonnage d'une première bride annulaire de la première couronne avec une seconde bride annulaire de la seconde couronne.

La présente proposition technologique est très utile dans le cas où les premières et secondes dentures des satellites, la première denture de la première couronne et la seconde denture de la seconde couronne sont inclinées par rapport à l'axe longitudinal du réducteur.

Le procédé peut encore comprendre une étape intermédiaire entre les étapes a) et b) consistant à bloquer en rotation autour de l'axe longitudinal X, le planétaire interne, les pignons satellites et le porte-satellites.

Le présent document concerne également une installation pour mise en œuvre du montage d'un planétaire externe à deux couronnes dans un réducteur comprenant les caractéristiques de la revendication 8.

L'installation permet de positionner le premier anneau de manière indépendante du second anneau dans un plan radial à l'axe longitudinal du réducteur, permettant dès lors un parfait positionnement de chaque anneau sur une couronne du réducteur et par suite l'application d'un couple pour l'une et l'autre des couronnes de manière indépendante.

L'installation peut être telle que :
- les premiers moyens d'application d'un couple comprennent N organes de traction portés par le bâti, régulièrement répartis autour de l'axe dudit premier anneau, N étant supérieur ou égal à 2,
- les seconds moyens d'application d'un couple comprennent K organes de traction portés par le bâti, régulièrement répartis autour de l'axe dudit premier anneau, K étant supérieur ou égal à 2,

Les premiers moyens d'application d'un couple peuvent comprendre au moins un premier organe de traction et au moins un second organe de traction portés par le bâti et configurés pour exercer une force de traction en deux points diamétralement opposés du premier anneau et dans des sens opposés, les seconds moyens d'application d'un couple comprenant au moins un troisième organe de traction et au moins un quatrième organe de traction portés par le bâti et configurés pour exercer une force de traction en deux points diamétralement opposés du second anneau et dans des sens opposés.

Chaque organe de traction peut être relié à l'anneau auquel il est associé par un moyen de liaison tel qu'une biellette articulée en rotation à une extrémité sur l'anneau considéré et articulée en rotation à l'extrémité opposée sur une partie mobile dudit organe de traction.

Les organes de traction peuvent être des vérins, par exemple.

Le premier anneau et le second anneau peuvent encore comprendre sur leurs faces internes des cannelures axiales aptes à coopérer avec des cannelures axiales correspondantes formées sur des faces radialement externes de brides annulaires des première et secondes couronnes.

L'installation comprend, avantageusement, des moyens de blocage en rotation autour de l'axe longitudinal X du réducteur, du planétaire interne et du porte-satellites. Ces moyens de blocage permettent d'assurer un blocage initial des éléments précités avant l'application du couple sur les premier et second anneaux. Ces moyens de blocage peuvent être de plusieurs types et pour partie du type cannelures/nervures et pour une autre partie par serrage d'un ou de plusieurs écrous.

Le réducteur utilisable avec l'installation peut être tel qu'il comprend un planétaire externe et des pignons satellites en prise avec un planétaire interne et avec le planétaire externe et montés chacun libre en rotation sur un porte-satellites, autour de leur axe, par exemple sur des pivots, le planétaire externe comprenant une première couronne comportant une première denture et une seconde couronne comportant une seconde denture chacune en prise avec des premières et secondes dentures des satellites.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est un schéma en coupe radiale d'un réducteur;
- la figure 2 est un schéma longitudinal d'une turbomachine ;
- la figure 3 est une vue schématique en perspective d'un réducteur de type épicycloïdal dépourvu du planétaire externe ;
- la figure 4 est une vue schématique en coupe du planétaire externe comprenant deux couronnes destinées à être assemblées l'une à l'autre et entourant des satellites à deux dentures ;
- les figures 5a et 5b sont des vues schématiques en perspective et en coupe du réducteur de la figure 3 monté sur une installation de montage du planétaire externe ;
- les figures 6a et 6b sont des vues schématiques en perspective et de face de l'installation des figures 5a et 5b représentant également un portique de support de moyens d'application destinés à permettre l'application d'un couple au planétaire externe ;

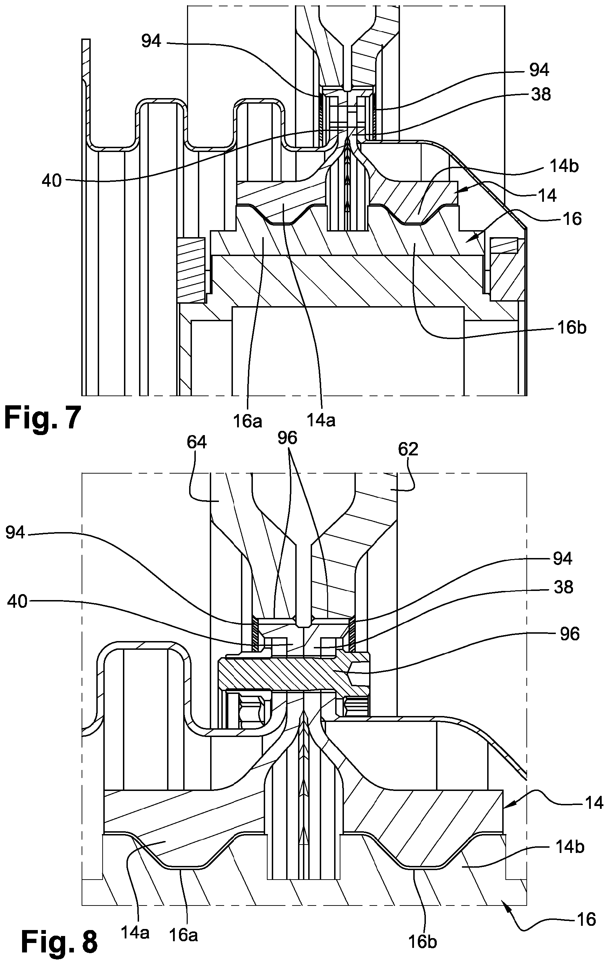

- les figures 7 et 8 sont des vues schématiques en coupe illustrant les étapes d'assemblage du planétaire externe du réducteur.

### DESCRIPTION DETAILLEE

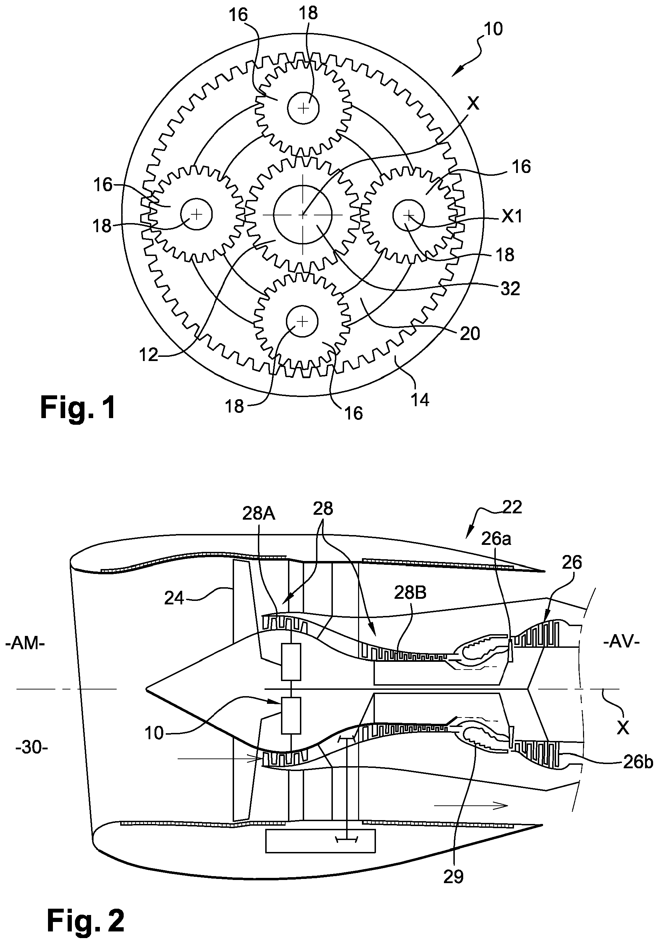

La figure 1 illustre schématiquement la structure d'un réducteur à configuration épicycloïdal ou planétaire. Ce type de réducteur 10 comprend classiquement un planétaire interne 12 (également appelé pignon central ou solaire) et un planétaire externe 14, les deux planétaires étant coaxiaux. Le planétaire interne 12 peut être mobile en rotation autour de son axe X, le planétaire externe 14 pouvant être fixe, ou couplé en rotation à une hélice comme dans le cas d'un turbopropulseur ou à une roue de soufflante comme dans le cas d'un turboréacteur à double flux. Le réducteur 10 comporte en outre des satellites, ou pignons satellites 16 montés de façon mobile en rotation sur des pivots 18 d'un porte-satellites 20. Chaque satellite 16 engrène simultanément avec le planétaire interne 12 et avec le planétaire externe 14. Le porte-satellites 20 est fixe ou pivotant autour de l'axe X du planétaire interne 12 et du planétaire externe 14. L'entrée peut être formée par le planétaire interne 12, et la sortie formée par le porte-satellites 20.

Dans un autre exemple, le porte-satellites 20 peut être fixe ou couplé en rotation à une hélice d'un turbopropulseur ou à une roue de soufflante d'un turboréacteur à double flux.

La figure 2 illustre schématiquement une turbomachine 22 comprenant d'amont en aval une soufflante 24, un compresseur basse pression 28a et un compresseur haute pression 28b, une chambre de combustion 29, une turbine haute pression 26a et une turbine basse pression 26b. Le rotor de la turbine haute pression entraine le rotor du compresseur haute pression et le rotor de la turbine basse pression entraine le rotor du compresseur basse pression lequel est relié à la soufflante. Un réducteur 10 est intercalé entre le rotor de soufflante et le rotor du compresseur basse pression pour réduire la vitesse de rotation de la soufflante 24, dépendamment de la vitesse de rotation du rotor de la turbine basse pression.

Le pignon central ou planétaire interne 12 entoure et est alors solidaire en rotation de l'arbre 32 du compresseur 28 basse pression comme illustré par exemple par les figures 1 et 2. Le réducteur 10 peut en particulier être monté dans une enceinte annulaire formée radialement à l'intérieur d'un compresseur basse pression 28a agencé en aval de la roue de soufflante 24 et en amont d'un compresseur haute pression 28b comme visible sur la figure 2.

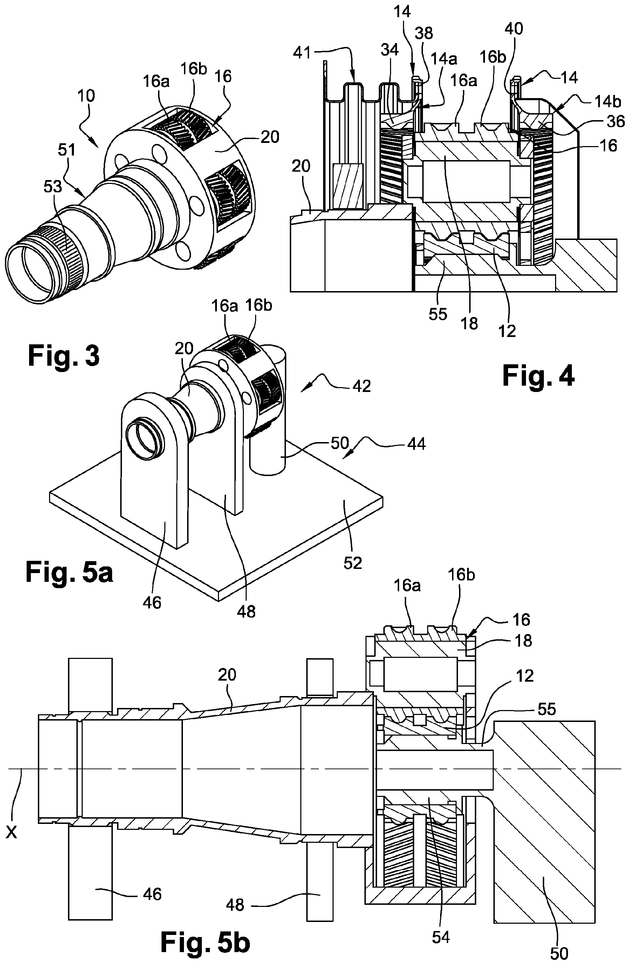

La figure 3 illustre en perspective le réducteur 10 détaillé précédemment, le planétaire externe n'étant pas représenté. On distingue donc le porte-satellites 20 portant les satellites 16, ainsi que les dentures des satellites 16a et 16b. Comme on peut le voir également sur la figure 4, le planétaire externe 14 comprend une première couronne 14a et une seconde couronne 14b. Les satellites 16 comprennent chacun une première denture 16a et une seconde denture 16b qui sont espacées axialement le long de l'axe X longitudinal. Les premières dentures 16a des satellites 16 sont en prises avec une première denture 34 de la première couronne 14a du planétaire externe 14 et les secondes dentures 16b des satellites 16 sont en prise avec une seconde denture 36 de la seconde couronne 14b. Comme on peut le voir, la première denture 34 de la première couronne 14a et la seconde denture 36 de la seconde couronne 14a sont inclinées par rapport à l'axe X longitudinal du réducteur 10. Plus spécifiquement, les première 34 et seconde 36 dentures des couronnes 14a, 14b sont ici inclinées selon une configuration en chevrons, ce qui permet d'augmenter la surface en contact entre les dentures 16a, 16b des satellites 16 et les dentures 34, 36 des couronnes 14a, 14b. Pour obtenir un tel montage, on comprend aisément que la première couronne 14a et la seconde couronne 14b doivent être montées selon l'axe X longitudinal et dans des sens opposés. On remarque également que la première couronne 14a comprend une bride 38 annulaire radiale destinée à être appliquée et fixée, par boulonnage par exemple, sur une seconde bride 40 annulaire radiale de la seconde couronne 14b. La liaison de ces deux brides 38, 40 annulaires radiales peut également servir à la fixation d'une ou plusieurs autres brides, permettant de fixer ensemble par exemple le porte-couronne 41 avec lesdites brides 38, 40 annulaires radiales.

Comme indiqué précédemment, le montage de la première couronne 14a et de la seconde couronne 14b est réalisé par exemple par centrage de la seconde couronne 14b sur la première couronne 14a. Toutefois, ce montage conduit à un surchargement de l'une des première 16a et seconde 16b dentures des satellites 16, ce qui n'est pas souhaitable.

Il est ainsi proposé une installation et un procédé permettant de réaliser un montage et un alignement optimal de la première couronne 14a et de la seconde couronne 14b autour des dentures 16a et 16b des satellites 16.

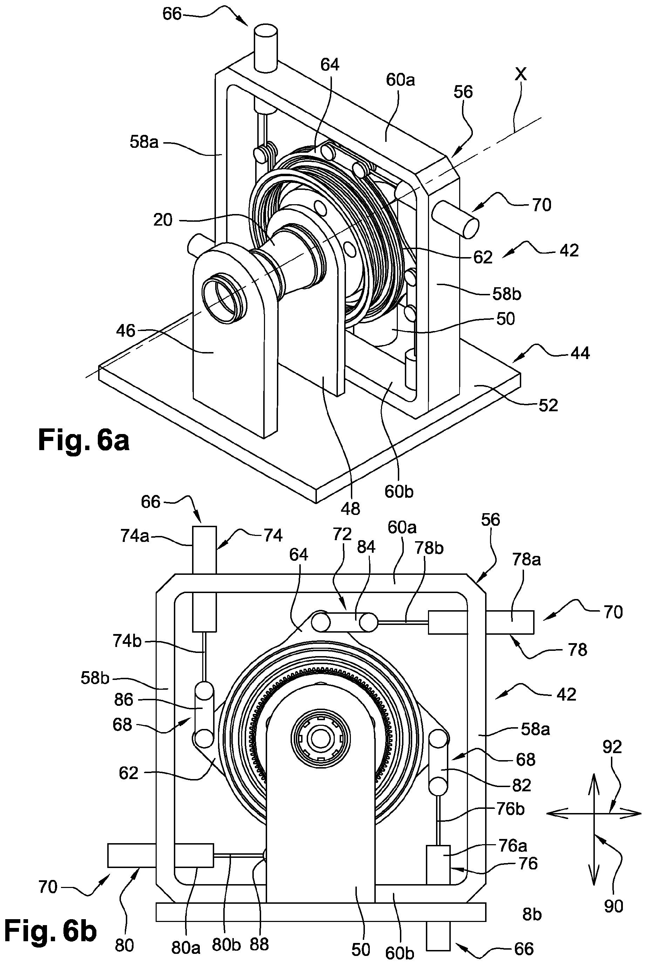

Les figures 5a, 5b, 6a et 6b représentent une installation 42 selon le présent document, l'installation comprenant un bâti 44 formant des moyens de support du réducteur et comprenant un premier organe 46 de support, un deuxième organe 48 de support et un troisième organe 50 de support portés par une base 52 du bâti 44. Le premier organe 46 et le deuxième organe 48 permettent de maintenir en position le porte-satellites. Par exemple, dans le cas d'un porte-satellites d'une configuration épicycloïdale, ces organes 46, 48, 50 comprennent un corps tubulaire 51 s'étendant selon l'axe longitudinal X du réducteur. Le premier organe 46 et le deuxième organe 48 comprennent chacun une ouverture de réception du corps tubulaire 51 relié au porte-satellites. Le troisième organe 50 de support comprend un bras 55 s'étendant selon l'axe longitudinal X du réducteur 10 lorsque celui-ci est supporté par le bâti 44. Le premier organe de support 46 comporte une ouverture dont la périphérie interne comprend des moyens de blocage en rotation tels que des cannelures axiales par exemple, coopérant avec des cannelures 53 du corps tubulaire 51. Le bras 55 comprend un dispositif de fixation avec le planétaire interne 12, par exemple via des cannelures 54 coopérant avec des cannelures de la face radialement interne du planétaire interne 12. Ainsi, le planétaire interne 12, les satellites et le porte-satellites sont bloqués en rotation autour de l'axe X sur le bras 55. Les cannelures de la face radialement interne du planétaire 12 interne sont préexistantes et autorisent un accouplement en rotation du planétaire interne 12 avec l'arbre 32 du compresseur. Un écrou peut être vissé à l'extrémité libre du bras 55 et serré par l'intermédiaire de l'extrémité du porte-satellites.

Le bâti 44 comprend en outre un portique 56 représenté uniquement sur les figures 6a et 6b et porté par la base 52. Ce portique 56 a une forme sensiblement rectangulaire formé de deux premiers montants verticaux 58a, 58b et deux seconds montants horizontaux 60a, 60b. Dans une réalisation particulière, le montant horizontal 60b pourrait être confondu avec la base 52.

Le portique 56 porte un premier anneau 62 et un second anneau 64 espacés axialement l'un de l'autre et ayant chacun un axe sensiblement aligné avec l'axe X longitudinale du réducteur sans pour autant être purement coaxial avec celui-ci. Le premier anneau 62 est relié à des premiers moyens d'application d'un couple 66 au premier anneau 62 portés par le portique 56 par l'intermédiaire de premiers moyens de liaison 68 autorisant un degré de liberté du premier anneau 62 en rotation autour de l'axe X longitudinal. De même, le second anneau 64 est relié au portique 56 à des seconds moyens d'application d'un couple 70 au second l'anneau 64 par l'intermédiaire de seconds moyens de liaison 72 autorisant un degré de liberté du second anneau 64 en rotation autour de l'axe X longitudinal. Comme on peut le voir, les premiers moyens de liaison 68 et les seconds moyens de liaison 72 sont indépendant l'un de l'autre, ce qui permet de relier indépendamment le premier anneau 62 et le second anneau 64 au portique 56.

Les premiers moyens d'application d'un couple 66 comprennent un premier organe 74 de traction et un second organe 76 de traction portés par le portique 56 du bâti 44. Le premier organe 74 de traction est porté par un montant horizontal 60a du portique 56 et le second organe 76 de traction est porté par le montant horizontal 60b en vis-à-vis du portique 56. Les seconds moyens d'application d'un couple 70 comprennent un troisième organe 78 de traction et un quatrième organe 80 de traction portés par le portique 56 du bâti 44. Le troisième organe 78 de traction est porté par un montant vertical 58a du portique 56 et le quatrième organe 80 de traction est porté par le montant vertical 58b en vis-à-vis du portique 56. Dans une configuration particulière, les organes de traction 74, 76, 78, 80 sont des vérins comprenant chacun un corps de vérin 74a, 76a, 78a, 80a et une tige 74b, 76b, 78b, 80b montés à translation dans le corps de vérin 74a, 76a, 78a, 80a.

Une biellette 82, 84, 86, 88 relie une extrémité de chaque de tige 74a, 76a, 78a, 80a de vérin à la périphérie d'un anneau 62, 64. Plus particulièrement, le premier organe de traction 74 est relié par une première biellette 86 au premier anneau 62 et le second organe 76 de traction est relié par une seconde biellette 82 au premier anneau 62. Le troisième organe 78 de traction est relié par une troisième biellette 80 au second anneau64 et le quatrième organe 80 de traction est relié par une quatrième biellette 88 au second anneau 64.

Comme cela est représenté sur les figures 6a et 6b, chaque biellette 82, 84, 86, 88 est articulée en rotation à une extrémité sur un anneau 62, 64 et à son extrémité opposée sur la tige 74b, 76b, 78b, 80b de vérin. Plus particulièrement, on observe que la première biellette 82 et la seconde biellette 86, qui sont reliées au premier anneau 62 sont orientées sensiblement parallèlement et s'étendent dans des sens opposés d'une première direction 90 sensiblement perpendiculaire à l'axe X longitudinal et depuis des extrémités opposées d'un diamètre du premier anneau 62. Egalement, la troisième biellette 84 et la quatrième biellette 88, qui sont reliées au second anneau 64 sont orientées sensiblement parallèlement et s'étendent dans des sens opposés d'une seconde direction 92 sensiblement perpendiculaire à l'axe X longitudinal et depuis des extrémités opposées d'un diamètre du second anneau 64. On remarque que la première direction 90 est perpendiculaire à la seconde direction 92, ce qui permet notamment un gain de place pour le montage des moyens d'application de couple sur le portique.

Le premier anneau 62 comprend des premiers moyens d'accouplement en rotation avec la première couronne 14a, ces premiers moyens d'accouplement coopérant avec des moyens complémentaires portés par la première couronne. De même, le second anneau 64 comprend des seconds moyens d'accouplement en rotation avec la seconde couronne 14b, ces seconds moyens d'accouplement coopérant avec des moyens complémentaires portés par la seconde couronne 14b. Dans une réalisation pratique, les premiers moyens d'accouplement du premier anneau 62 et les seconds moyens d'accouplement du second anneau 64 sont des cannelures 94 qui coopèrent avec des cannelures 96 des surfaces radialement externes de la première couronne 14a et de la seconde couronne 14b.

Pour réaliser le montage de la première couronne 14a et de la seconde couronne 14b dans le réducteur 10, on utilise l'installation telle que décrite ci-dessus. On comprend que l'on pourrait toutefois utiliser une autre installation.

Ainsi, dans un premier temps, l'ensemble formé du planétaire interne 12 des pignons satellites 16 et du porte-satellites 20 est monté sur le bâti 44 dans la position indiquée telle que représentée et décrite aux figures 5a et 5b. Dans un second temps, la première couronne 14a est montée autour des satellites 16 de manière à ce que la première denture 34 de la première couronne 14a vienne en prise avec les premières dentures 16a des satellites 16. Egalement, dans cette seconde étape, la seconde couronne 14b est monté autour des satellites 16 de manière à ce que la seconde denture 36 de la seconde couronne 14b vienne en prise avec les secondes dentures 16b des satellites 16. Dans un troisième temps, le premier anneau 62 est monté en prise avec la périphérie radialement externe de la première bride 38 et le second anneau 64 est monté en prise avec la périphérie radialement externe de la seconde bride 40. Dans un quatrième temps, on applique simultanément et indépendamment un premier couple au premier anneau62 centrée sur l'axe de la première couronne 14a et un second couple à la seconde couronne 14b centrée sur l'axe de la seconde couronne 14b, le premier couple et le second couple ayant des valeurs identiques. Le premier couple et le second couple sont appliqués selon un même sens de rotation autour des axes des premières et secondes couronnes. L'application des couples de manière indépendante à chacun du premier anneau 62 et du second anneau 64 est rendu possible par l'utilisation des moyens de liaisons à biellette tels que décrit précédemment. Dans un cinquième temps, on réalise un serrage des première 38 et seconde 40 brides ensemble, par boulonnage 96 dans des orifices des première et seconde brides.

Dans un autre exemple de réalisation, la prise du premier anneau 62 avec la bride 38 de la première couronne 14a, et du second anneau 64 avec la bride 40 de la seconde couronne 14b, peut être réalisée par d'autres systèmes que des prises radiales externes, comme par exemple par des tirants passant par les trous de vis des brides 38 et 40.

Dans un exemple de réalisation du procédé, le couple appliqué à une valeur qui correspond au couple subi par le réducteur lors d'une phase d'utilisation donnée, ce couple étant par exemple supérieur à 10 N. On comprend que le couple doit être non nul.

## Revendications

1. Procédé de montage d'un réducteur (10) d'axe longitudinal X, comprenant un planétaire externe (14) et des pignons satellites (16) en prise avec un planétaire interne (12) et avec le planétaire externe (14) et montés chacun libre en rotation sur un porte-satellites (20), le planétaire externe (14) comprenant une première couronne (14a) comportant une première denture (34) et une seconde couronne (14b) comportant une seconde denture (36) chacune en prise avec des premières (16a) et secondes (16b) dentures des satellites (16), le procédé comprenant les étapes suivantes :
a) Fournir un ensemble comprenant le planétaire interne (12), les pignons satellites (16) en prise avec le planétaire interne (12) et portés par le porte-satellites (20),
b) Monter la première couronne (14a) et la seconde couronne (14b) autour des satellites (16) de manière à ce que les dentures (34, 36) des première couronne (14a) et seconde couronne (14b) viennent respectivement en prise avec les premières dentures (16a) des satellites et les secondes dentures des satellites (16b), et **caractérisé par** l'étape suivante
c) Appliquer un premier couple à la première couronne (14a) centré sur l'axe de la première couronne (14a) et un second couple à la seconde couronne (14b) centré sur l'axe de la seconde couronne (14b), le premier couple et le second couple ayant des valeurs identiques et étant appliqués selon un même sens de rotation autour des axes des première et seconde couronnes (14a, 14b).

2. Procédé selon la revendication 1, dans lequel il comprend après l'étape c) une étape de solidarisation de la première couronne (14a) et de la seconde couronne (14b).

3. Procédé selon la revendication 2, dans lequel l'étape de solidarisation est réalisée par boulonnage d'une première bride annulaire (38) de la première couronne (14a) avec une seconde bride annulaire (40) de la seconde couronne (14b).

4. Procédé selon l'une des revendications 1 à 3, dans lequel le couple appliqué a une valeur qui correspond au couple subi par le réducteur (10) lors d'une phase d'utilisation donnée, ce couple étant au moins supérieur à 10 N.

5. Procédé selon l'une des revendications 1 à 4, dans lequel les premières (16a) et secondes (16b) dentures des satellites (16), la première denture (34) de la première couronne (14a) et la seconde denture (36) de la seconde couronne (14b) sont inclinées par rapport à l'axe (X) longitudinal du réducteur (10).

6. Procédé selon la revendication 5, dans lequel la première denture (34) de la première couronne (14a) et la seconde denture (36) de la seconde couronne (14b) présentent un agencement en chevron coopérant avec un agencement en chevron formé par les premières (16a) et secondes (16b) dentures des satellites (16).

7. Procédé selon l'une des revendications 1 à 6, dans lequel il comprend une étape intermédiaire entre les étapes a) et b) consistant à bloquer en rotation autour de l'axe longitudinal X, le planétaire interne, les pignons satellites et le porte-satellites.

8. Installation pour la mise en œuvre du procédé de montage d'un planétaire externe (14) à double couronne (14a, 14b) dans un réducteur (10) selon la revendication 1, comprenant
- un bâti (44) de support dudit train réducteur (10) selon son axe longitudinal,
- des premiers moyens d'application d'un couple (66) autour de l'axe d'un premier anneau (62) apte à venir en prise avec une première couronne (14a) du planétaire externe (14),
- des seconds moyens d'application (70) d'un couple autour de l'axe d'un second anneau (64) apte à venir en prise avec une seconde couronne (14b) du planétaire externe (14),
- le premier anneau (62) étant relié aux premiers moyens d'application d'un couple (66) par des premiers moyens de liaison (68) autorisant un degré de liberté du premier anneau (62) dans un plan perpendiculaire à l'axe longitudinal et le second anneau (64) étant relié aux seconds moyens d'application d'un couple (70) par des seconds moyens de liaison (72) autorisant un degré de liberté du premier anneau (62) dans un plan perpendiculaire à l'axe longitudinal, les premiers moyens de liaison (68) étant indépendants des seconds moyens de liaison (72).

9. Installation selon la revendication 8, dans laquelle :
- les premiers moyens d'application d'un couple (66) comprennent N organes (74, 76) de traction portés par le bâti, régulièrement répartis autour de l'axe dudit premier anneau (62),
- les seconds moyens d'application d'un couple (70) comprennent N organes (78, 80) de traction portés par le bâti, régulièrement répartis autour de l'axe dudit premier anneau (64).

10. Installation selon la revendication 8 ou 9, dans laquelle les premiers moyens d'application d'un couple (66) comprennent au moins un premier organe (74) de traction et au moins un second organe (76) de traction portés par le bâti (44) et configurés pour exercer une force de traction en deux points diamétralement opposés du premier anneau (62) et dans des sens opposés, les seconds moyens d'application d'un couple (70) comprenant au moins un troisième organe (78) de traction et au moins un quatrième organe (80) de traction portés par le bâti (44) et configurés pour exercer une force de traction en deux points diamétralement opposés du second anneau (64) et dans des sens opposés.

11. Installation selon la revendication 9, dans laquelle chaque organe de traction est relié à l'anneau à laquelle il est associé par une biellette articulée en rotation à une extrémité sur l'anneau (62, 64) considéré et articulée en rotation à l'extrémité opposée sur une partie mobile dudit organe de traction.

12. Installation selon la revendication 9 ou 11, dans laquelle les organes (74, 76, 78, 80) de traction sont des vérins.

13. Installation selon l'une des revendications 8 à 11, dans laquelle le premier anneau (62) et le second anneau (64) comprennent sur leurs faces internes des cannelures axiales aptes à coopérer avec des cannelures axiales correspondantes formées sur des faces radialement externes de brides annulaires des première et secondes couronnes.

14. Installation selon l'une des revendications 8 à 13, dans lequel le bâti comprend des moyens de blocage en rotation autour de l'axe longitudinal X du réducteur, du planétaire interne et du porte-satellites.

## Patentansprüche

1. Verfahren zur Montage eines Untersetzungsgetriebes (10) mit einer Längsachse X, enthaltend ein äußeres Sonnenrad (14) und Planetenräder (16), die mit einem inneren Sonnenrad (12) und mit dem äußeren Sonnenrad (14) in Eingriff stehen und jeweils frei drehbar auf einem Planetenträger (20) gelagert sind, wobei das äußere Sonnenrad (14) ein erstes Hohlrad (14a) mit einer ersten Verzahnung (34) und ein zweites Hohlrad (14b) mit einer zweiten Verzahnung (36) umfasst, die jeweils mit ersten (16a) und zweiten (16b) Verzahnungen der Planetenräder (16) in Eingriff stehen, wobei das Verfahren die folgenden Schritte umfasst:
a) Bereitstellen einer Anordnung, die das innere Sonnenrad (12) und die Planetenräder (16), die mit dem inneren Sonnenrad (12) in Eingriff stehen und von dem Planetenträger (20) getragen werden, umfasst,
b) Montieren des ersten Hohlrads (14a) und des zweiten Hohlrads (14b) um die Planetenräder (16) herum, so dass die Verzahnungen (34, 36) des ersten Hohlrads (14a) und des zweiten Hohlrads (14b) jeweils mit den ersten Verzahnungen (16a) der Planetenräder bzw. den zweiten Verzahnungen der Planetenräder (16b) in Eingriff gelangen, **gekennzeichnet durch** den nachstehenden Schritt:
c) Aufbringen eines auf die Achse des ersten Hohlrads (14a) zentrierten ersten Drehmoments auf das erste Hohlrad (14a) und eines auf die Achse des zweiten Hohlrads (14b) zentrierten zweiten Drehmoments auf das zweite Hohlrad (14b), wobei das erste Drehmoment und das zweite Drehmoment identische Werte haben und in derselben Drehrichtung um die Achsen des ersten und des zweiten Hohlrads (14a, 14b) aufgebracht werden.

2. Verfahren nach Anspruch 1, wobei es nach Schritt c) einen Schritt des festen Verbindens von dem ersten Hohlrad (14a) und dem zweiten Hohlrad (14b) umfasst.

3. Verfahren nach Anspruch 2, wobei der Schritt des festen Verbindens durch Verschrauben eines ersten ringförmigen Flansches (38) des ersten Hohlrads (14a) mit einem zweiten ringförmigen Flansch (40) des zweiten Hohlrads (14b) erfolgt.

4. Verfahren nach einem der Ansprüche 1 bis 3, wobei das aufgebrachte Drehmoment einen Wert hat, der dem Drehmoment entspricht, das das Untersetzungsgetriebe (10) in einer vorgegebenen Nutzungsphase erfährt, wobei dieses Drehmoment zumindest größer als 10 N ist.

5. Verfahren nach einem der Ansprüche 1 bis 4, wobei die ersten (16a) und die zweiten (16b) Verzahnungen der Planetenräder (16), die erste Verzahnung (34) des ersten Hohlrads (14a) und die zweite Verzahnung (36) des zweiten Hohlrads (14b) in Bezug auf die Längsachse (X) des Untersetzungsgetriebes (10) geneigt verlaufen.

6. Verfahren nach Anspruch 5, wobei die erste Verzahnung (34) des ersten Hohlrads (14a) und die zweite Verzahnung (36) des zweiten Hohlrads (14b) eine Fischgrät-Anordnung aufweisen, die mit einer Fischgrät-Anordnung zusammenwirkt, die aus den ersten (16a) und den zweiten (16b) Verzahnungen der Planetenräder (16) gebildet ist.

7. Verfahren nach einem der Ansprüche 1 bis 6, wobei es zwischen den Schritten a) und b) einen Zwischenschritt umfasst, der darin besteht, das innere Sonnenrad, die Planetenräder und den Planetenträger gegen eine Drehung um die Längsachse X zu sichern.

8. Anlage zum Durchführen des Verfahrens zur Montage eines äußeren Sonnenrads (14) mit doppeltem Hohlrad (14a, 14b) in ein Untersetzungsgetriebe (10) nach Anspruch 1, enthaltend:
- ein Gestell (44) zum Tragen des Untersetzungsgetriebezuges (10) entlang seiner Längsachse,
- erste Mittel (66) zum Aufbringen eines Drehmoments um die Achse eines ersten Rings (62), der geeignet ist, mit einem ersten Hohlrad (14a) des äußeren Sonnenrads (14) in Eingriff zu gelangen,
- zweite Mittel (70) zum Aufbringen eines Drehmoments um die Achse eines zweiten Rings (64), der geeignet ist, mit einem zweiten Hohlrad (14b) des äußeren Sonnenrads (14) in Eingriff zu gelangen,
- wobei der erste Ring (62) mit den ersten Mitteln (66) zum Aufbringen eines Drehmoments über erste Verbindungsmittel (68) verbunden ist, die einen Freiheitsgrad des ersten Rings (62) in einer Ebene senkrecht zur Längsachse zulassen, und wobei der zweite Ring (64) mit den zweiten Mitteln (70) zum Aufbringen eines Drehmoments über zweite Verbindungsmittel (72) verbunden ist, die einen Freiheitsgrad des ersten Rings (62) in einer Ebene senkrecht zur Längsachse zulassen, wobei die ersten Verbindungsmittel (68) von den zweiten Verbindungsmitteln (72) unabhängig sind.

9. Anlage nach Anspruch 8, wobei:
- die ersten Mittel (66) zum Aufbringen eines Drehmoments N Zugorgane (74, 76) umfassen, die von dem Gestell getragen werden und gleichmäßig um die Achse des ersten Rings (62) verteilt sind,
- die zweiten Mittel (70) zum Aufbringen eines Drehmoments N Zugorgane (78, 80) umfassen, die von dem Gestell getragen werden und gleichmäßig um die Achse des ersten Rings (64) verteilt sind.

10. Anlage nach Anspruch 8 oder 9, wobei die ersten Mittel (66) zum Aufbringen eines Drehmoments zumindest ein erstes Zugorgan (74) und zumindest ein zweites Zugorgan (76) umfassen, die von dem Gestell (44) getragen werden und dazu ausgelegt sind, eine Zugkraft an zwei diametral gegenüberliegenden Punkten des ersten Rings (62) und in entgegengesetzten Richtungen auszuüben, wobei die zweiten Mittel (70) zum Aufbringen eines Drehmoments zumindest ein drittes Zugorgan (78) und zumindest ein viertes Zugorgan (80) umfassen, die von dem Gestell (44) getragen werden und dazu ausgelegt sind, eine Zugkraft an zwei diametral gegenüberliegenden Punkten des zweiten Rings (64) und in entgegengesetzten Richtungen auszuüben.

11. Anlage nach Anspruch 9, wobei jedes Zugorgan mit dem Ring, dem es zugeordnet ist, über eine Verbindungsstange verbunden ist, die an einem Ende drehbar an dem betreffenden Ring (62, 64) und am entgegengesetzten Ende drehbar an einem beweglichen Teil des Zugorgans angelenkt ist.

12. Anlage nach Anspruch 9 oder 11, wobei die Zugorgane (74, 76, 78, 80) Kraftzylinder sind.

13. Anlage nach einem der Ansprüche 8 bis 11, wobei der erste Ring (62) und der zweite Ring (64) auf ihren Innenseiten axiale Rillen aufweisen, die geeignet sind, mit entsprechenden axialen Rillen zusammenzuwirken, die auf radial äußeren Seiten von ringförmigen Flanschen des ersten und des zweiten Hohlrads ausgebildet sind.

14. Anlage nach einem der Ansprüche 8 bis 13, wobei das Gestell Mittel zur Drehsicherung des Untersetzungsgetriebes, des inneren Sonnenrads und des Planetenträgers um die Längsachse X umfasst.

## Claims

1. A method of mounting a reduction gear (10) of longitudinal axis X, comprising an outer sun gear (14) and planet gears (16) meshing with an inner sun gear (12) and with the outer sun gear (14) and each mounted for free rotation on a planet carrier (20), the outer sun gear (14) comprising a first crown (14a) having a first toothing (34) and a second crown (14b) having a second toothing (36) each meshing with first (16a) and second (16b) toothings of the planet gears (16), the method comprising the following steps:
a) Providing an assembly comprising the inner sun gear (12), the planet gears (16) meshing with the inner sun gear (12) and carried by the planet carrier (20),
b) Mounting the first crown (14a) and the second crown (14b) around the planet gears (16) so that toothings (34, 36) of the first crown (14a) and the second crown (14b) mesh with the first toothings (16a) of the planet gears and the second toothings (16b) of the planet gears, respectively, and **characterized by** the following step
c) Applying a first torque to the first crown (14a) centred on the axis of the first crown (14a) and a second torque to the second crown (14b) centred on the axis of the second crown (14b), the first torque and the second torque having identical values and being applied in the same direction of rotation about the axes of the first and second crowns (14a, 14b).

2. Method according to claim 1, in which after step c), it comprises a step of joining the first crown (14a) and the second crown (14b).

3. Method according to claim 2, wherein the joining step is carried out by bolting a first annular flange (38) of the first crown (14a) with a second annular flange (40) of the second crown (14b).

4. Method according to one of claims 1 to 3, in which the applied torque has a value which corresponds to the torque undergone by the reduction gear (10) during a given phase of use, this torque being at least greater than 10 N.

5. Method according to one of claims 1 to 4, in which the first (16a) and second (16b) toothings of the planet gears (16), the first toothing (34) of the first crown (14a) and the second toothing (36) of the second crown (14b) are inclined with respect to the longitudinal axis (X) of the reduction gear (10).

6. Method according to claim 5, wherein the first toothing (34) of the first crown (14a) and the second toothing (36) of the second crown (14b) have a herringbone arrangement cooperating with a chevron arrangement formed by the first (16a) and second (16b) toothings of the planet gears (16).

7. Method according to one of claims 1 to 6, which includes an intermediate step between steps a) and b) consisting of locking the inner sun gear, planet gears and planet carrier against rotation about the longitudinal axis X.

8. Installation for implementing the method of mounting an outer sun gear (14) with a double crown (14a, 14b) in a reduction gear (10), according to claim 1, comprising:
- a frame (44) for supporting said reduction gear (10) along its longitudinal axis,
- first means for applying a torque (66) around the axis of a first ring (62) capable of engaging with a first (14a) crown of the outer sun gear (14),
- second means (70) for applying a torque around the axis of a second ring (64) capable of engaging with a second crown (14b) of the outer sun gear (14),
- the first ring (62) being connected to the first torque-applying means (66) by first connecting means (68) allowing a degree of freedom of the first ring (62) in a plane perpendicular to the longitudinal axis and the second ring (64) being connected to the second torque-applying means (70) by second connecting means (72) allowing a degree of freedom of the first ring (62) in a plane perpendicular to the longitudinal axis, the first connecting means (68) being independent of the second connecting means (72).

9. Installation according to claim 8, wherein:
- the first means for applying a torque (66) comprise N traction members (74, 76) carried by the frame, evenly distributed around the axis of said first ring (62),
- the first means for applying a torque (70) comprise N traction members (78, 80) carried by the frame, evenly distributed around the axis of said first ring (64).

10. Installation according to claim 8 or 9, wherein the first torque application means (66) may comprise at least one first traction member (74) and at least one second traction member (76) carried by the frame (44) and configured to exert a traction force at two diametrically opposite points of the first ring (62) and in opposite directions, the second torque application means (70) comprising at least one third traction member (78) and at least one fourth traction member (80) carried by the frame (44) and configured to exert a traction force at two diametrically opposite points of the second ring (64) and in opposite directions.

11. Installation according to claim 9, in which each traction member is connected to the ring with which it is associated by a connecting rod articulated in rotation at one end to the ring (62, 64) in question and articulated in rotation at the opposite end to a movable part of said traction member.

12. Installation according to claim 9 or 11, in which the traction members (74, 76, 78, 80) are cylinders.

13. Installation according to one of claims 8 to 11, wherein the first ring (62) and the second ring (64) comprise on their inner faces axial splines capable of cooperating with corresponding axial splines formed on radially outer faces of annular flanges of the first and second crowns.

14. Installation according to one of claims 8 to 13, wherein the frame comprises means for preventing rotation about the longitudinal axis X of the gearbox, the inner sun gear and the planet carrier.
